Europäisches Patentamt

European Patent Office

Office européen des brevets

(19)

(11) Veröffentlichungsnummer: **0 243 618**
B1

(12) **EUROPÄISCHE PATENTSCHRIFT**

(45) Veröffentlichungstag der Patentschrift:
**17.01.90**

(51) Int. Cl.⁴: **B60T 15/46**, B60T 8/28

(21) Anmeldenummer: **87103130.8**

(22) Anmeldetag: **05.03.87**

(54) **Einrichtung zum Steuern des Bremsdruckes.**

(30) Priorität: **02.05.86 DE 3615002**

(43) Veröffentlichungstag der Anmeldung:
**04.11.87 Patentblatt 87/45**

(45) Bekanntmachung des Hinweises auf die Patenterteilung:
**17.01.90 Patentblatt 90/3**

(84) Benannte Vertragsstaaten:
**AT DE FR GB IT SE**

(56) Entgegenhaltungen:
**DE-A- 3 338 690**
**DE-B- 1 963 879**

(73) Patentinhaber: **WABCO Westinghouse Fahrzeugbremsen GmbH, Am Lindener Hafen 21 Postfach 91 12 80, D-3000 Hannover 91(DE)**

(72) Erfinder: **Pohl, Wolfgang, Dipl.-Ing., Im Stühe 56, D-3008 Garbsen 6(DE)**
Erfinder: **Reinecke, Erich, Dipl.-Ing., Kastanieneck 6, D-3167 Burgdorf(DE)**
Erfinder: **Schulz, Hans Joachim, Gilborn 16, D-3002 Wedemark(DE)**

(74) Vertreter: **Schrödter, Manfred, WABCO Westinghouse Fahrzeugbremsen GmbH Am Lindener Hafen 21 Postfach 91 12 80, D-3000 Hannover 91(DE)**

**Beschreibung**

Die Erfindung betrifft eine Einrichtung zum Steuern des Bremsdruckes für ein von einem Zugfahrzeug gezogenes Anhängerfahrzeug gemäß dem Oberbegriff des Patentanspruchs 1.

Eine solche Einrichtung ist durch die DE-A 33 38 690 vorbekannt. Mit der vorbekannten Einrichtung wird erreicht, daß sich bei einem Bremsvorgang, der durch eine Betätigung des Bremsventils des Zugfahrzeuges ausgelöst wird, in der Bremseinrichtung des Anhängerfahrzeuges ein Bremsdruck aufbaut, der dem Bremsdruck des Zugfahrzeuges zeitlich voreilt. Dadurch wird bei einem Bremsvorgang das Zugfahrzeug und das Anhängerfahrzeug in gestrecktem Zustand gehalten.

Die vorbekannte Einrichtung verwendet eine Ventileinrichtung mit zwei in Reihe geschalteten Steuerkolben bzw. mit zwei auf einen Steuerkolben wirkende Wirkflächen, die zeitlich versetzt von je einem Steuerkreis mit eigener Druckmittelquelle und unabhängig voneinander ansteuerbar sind. Der voreilende Steuerkreis, der eine zeitlich voreilende Bremsung des Anhängers vor dem Zugfahrzeug einleitet, wird von einer Druckmittelquelle mit einem vorgegebenen und · möglichst gleichbleibenden Druck gespeist, so daß sich wiederholende Bremsvorgänge mit gleichbleibender Wirkung einleitbar sind.

Eine Anpassung an die unterschiedliche Gängigkeit der mechanischen Betätigungselemente der Bremseinrichtung des Anhängerfahrzeuges sowie ein universeller Einsatz der vorbekannten Ventileinrichtung auf verschiedenen Anhängertypen und Fabrikaten mit jeweils unterschiedlichem mechanischen Kraftaufwand für das Einleiten eines Bremsvorganges kann mit der vorbekannten Einrichtung nur durch Verwendung aufwendiger Mittel, wie z. B. eines regelbaren Druckbegrenzungsventils im voreilenden Steuerkreis, stromabwärts zu der vorbekannten Ventileinrichtung erreicht werden.

Der Erfindung liegt deshalb die Aufgabe zugrunde, eine Einrichtung der eingangs genannten Art so zu verbessern, daß die durch den voreilenden Steuerkreis in die Anhängerbremseinrichtung einzuleitende Bremskraft in ihrer Höhe, insbesondere an die jeweiligen zu überwindenden mechanischen Widerstände sowie auch Rückstellkräfte der Bremselemente des Anhängerfahrzeuges anpaßbar ist.

Diese Aufgabe wird durch die im Patentanspruch 1 angegebene Erfindung gelöst. Weiterbildungen und vorteilhafte Ausführungsbeispiele sind in den Unteransprüchen angegeben.

Die Erfindung hat den Vorteil, daß die in der Bremseinrichtung des Anhängerfahrzeuges wirksame voreilende Bremskraft entsprechend dem individuellen Bremsverhalten des Wagenzuges im Fahrbetrieb auf einfache Weise nachregulierbar ist.

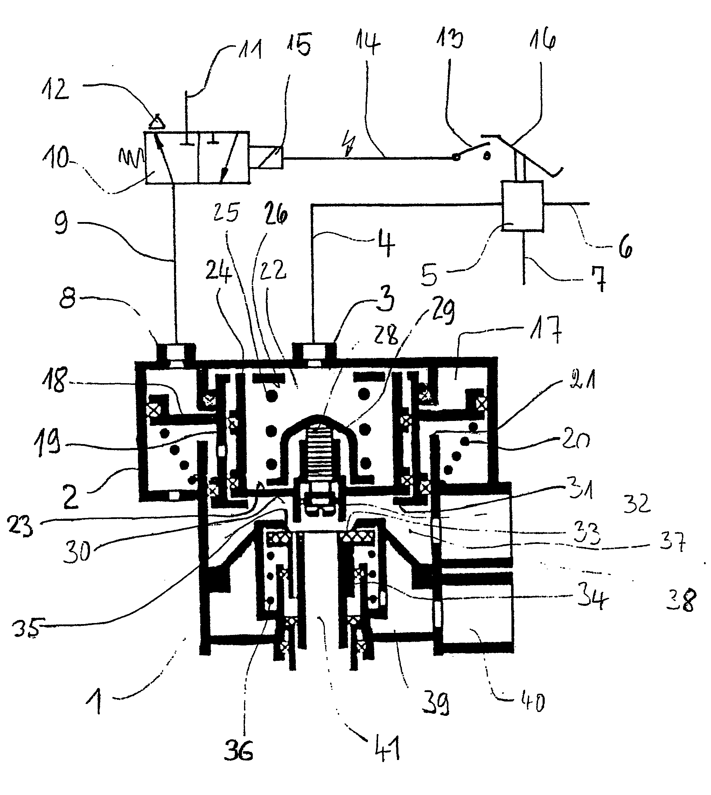

Die Erfindung wird anhand eines Ausführungsbeispieles, das in der Zeichnung dargestellt ist, näher erläutert.

Die Zeichnung zeigt eine zweikreisige Einrichtung zum Steuern des Bremsdruckes für ein von einem Zugfahrzeug gezogenes Anhängerfahrzeug.

Eine als Anhängersteuerventil dienende Ventileinrichtung (1) mit einem Gehäuse (2) ist über einen Druckmittelanschluß (3) und eine Druckmittelleitung (4) mit einem Bremsventil (5) verbunden. Eine mit einer Druckmittelleitung (6) verbundene Druckmittelquelle ist über das Bremsventil (5) mit der Leitung (4) sowie über eine Leitung (7) mit der Bremseinrichtung des Zugwagens verbindbar.

Ein Druckmittelanschluß (8) der Ventileinrichtung (1) ist über eine Druckmittelleitung (9) mit einem Wegeventil (10) verbunden, über das der Druckmittelanschluß (8) entweder über eine Druckmittelleitung (11) mit einer Druckmittelquelle oder mit einem Auslaß (12) zur Atmosphäre verbindbar ist. Das Wegeventil (10) ist elektrisch schaltbar. Eine Schalteinrichtung (13), die über eine elektrische Leitung (14) mit einem elektrischen Steuereingang (15) des Wegeventils (10) verbunden ist, ist in Abhängigkeit von der Stellung eines Betätigungsorganes (16) der Ventileinrichtung (1) schaltbar.

Der Druckmittelanschluß (8) mündet in eine Druckmittelkammer (17), die von einer ringförmigen Wirkfläche (18) eines Steuerkolbens (19) begrenzt ist. Unter der Einwirkung eines Druckmittels in der Druckmittelkammer (17) ist der Steuerkolben (19) gegen die Kraft einer Rückstellfeder (20) bis zu einem Anschlag (21) des Gehäuses (2) verschiebbar.

Der Druckmittelanschluß (3) mündet in eine Druckmittelkammer (22), die von der Wirkfläche (23) eines Steuerkolbens (24) begrenzt ist. Die Steuerkolben (24 und 19) sind teleskopartig und relativ zueinander verschiebbar angeordnet. Eine Feder (25) stützt sich einerseits auf einer durchbrochenen Kolbenfläche (26) des Steuerkolbens (19) und andererseits über einen Federteller (29) und eine Stellschraube (28) auf dem Steuerkolben (24) ab. Der Steuerkolben (24) ruht, durch die Kraft der Feder (25) mit einem Teil seiner Wirkfläche (30) auf einem Anschlag (31) des Steuerkolbens (19). Die Steuerkolben (19) und (24) sind durch die Feder (25) gegeneinander vorgespannt. Die Kraft dieser Verspannung ist durch die Stellschraube (28) verstellbar.

Der Steuerkolben (24) weist einen Fortsatz (32) auf, der mit einer Dichtfläche (33) eines in dem Gehäuse (2) längsverschieblichen Ventilkörpers (34) ein Auslaßventil (32, 33) bildet, über das eine Kammer (37) über einen Auslaß (41) mit der Atmosphäre verbindbar ist. Die Dichtfläche (33) bildet mit einem Ventilstiz (35) ein Einlaßventil (33, 35), das in Ruhestellung durch eine am Gehäuse (2) einerseits und am Ventilkörper (34) andererseits sich abstützende Feder (36) in geschlossener Position gehalten wird. Unterhalb der Steuerkolben (19) und (24) befindet sich die Kammer (37), die über einen gehäusefesten Auslaß (38) mit der Bremseinrichtung des Anhängerfahrzeuges verbunden ist. Die Kammer (37) ist über das Einlaßventil (33, 35) mit einer Kammer (39) verbindbar, die über einen gehäusefesten Einlaß (40) an eine Druckmittelquelle angeschlossen ist, die als Druckmittelvorrat für die Bremseinrichtung des Anhängerfahrzeuges dient.

Die Druckmittelkammer (22) mit dem ersten Steuerkolben (24) bildet in Verbindung mit dem Bremsventil (5) einen ersten Steuerkreis, mit dem die Bremskraft des Anhängerfahrzeuges regelbar ist. Die Druckmittelkammer (17) mit dem zweiten Steuerkolben (19) bildet in Verbindung mit dem Wegeventil (10) einen zweiten Steuerkreis, mit dem, voreilend vor dem ersten Steuerkreis, die Bremseinrichtung des Anhängerfahrzeuges mit einem vorgegebenen Druck des Druckmittels beaufschlagbar ist.

Die Druckmittelkammern (17, 22 und 37) sind permanent gegeneinander abgedichtet, so daß auch in den verschiedenen möglichen Arbeitsstellungen der Ventileinrichtung (1) kein Druckmittelaustausch zwischen diesen Kammern erfolgt.

Die Wirkungsweise dieser Einrichtung ist wie folgt:

Die Betätigung des Bremsventils (5) löst einen Bremsvorgang in den miteinander verbundenen Bremssystemen des Zugfahrzeuges und des Anhängerfahrzeuges aus, indem die an die Druckmittelleitung (6) angeschlossene Druckmittelquelle über die Druckmittelleitung (7) mit der Bremseinrichtung des Zugfahrzeuges und über die Druckmittelleitung (4) und die Ventileinrichtung (1) mit der Bremseinrichtung des Anhängerfahrzeuges verbunden wird. Der Stellung des Betätigungsorganes (16) des Bremsventils (5) entsprechend erfolgt die Bremsung des Zugfahrzeuges und des Anhängerfahrzeuges mehr oder weniger stark.

Um eine dem Zugfahrzeug zeitlich voreilende Bremsung des Anhängerfahrzeuges zu erreichen, wird der Bremseinrichtung des Anhängerfahrzeuges ein zeitlich voreilendes Druckmittel vorgegebenen Druckes zugeführt. Dies bewirkt, daß auch der mechanische Teil der Bremseinrichtung des Anhängers dem Zugfahrzeug voreilend aktiviert wird, d. h., daß die Reibbeläge der Bremsen des Anhängerfahrzeuges mit den Bremstrommeln bzw. Bremsscheiben Kontakt aufnehmen, ohne daß jedoch die Fahreigenschaft des Wagenzuges, besonders bei Beginn schwacher Bremsungen, unbeabsichtigt und in unerwünschter Weise nachteilig beeinflußt wird.

Bei Beginn eines Bremsvorganges wird durch einen Anfangshub des Betätigungsorgans (16) die Schalteinrichtung (13) betätigt und damit dem elektrischen Steuereingang (15) über die elektrische Leitung (14) ein Schaltstrom zugeführt. Hierdurch wird das Wegeventil (10) von der Grundstellung in die Arbeitsstellung geschaltet, wodurch eine an die Druckmittelleitung (11) angeschlossene Druckmittelquelle über die Druckmittelleitung (9) und den Druckmittelanschluß (8) mit der Druckmittelkammer (17) verbunden wird.

Die Beaufschlagung der Wirkfläche (18) mit Druck bewirkt eine Verschiebung des Steuerkolbens (19) gegen die Kraft der Rückstellfeder (20) in Richtung auf den Anschlag (21), bis der Steuerkolben (19) auf den Anschlag (21) zur Anlage kommt. Noch während der Verschiebung des Steuerkolbens (19) berührt der Fortsatz (32) den Ventilkörper (34), wodurch sich bei einer weiteren, gemeinsamen Verschiebung des Steuerkolbens (19) und des Ventilkörpers (34) das Einlaßventil (32, 35) öffnet. Das in der Kammer (39) anstehende Druckmittel tritt daraufhin über das geöffnete Einlaßventil (32, 35) in die Kammer (37) ein und wird über den Auslaß (38) der Bremseinrichtung des Anhängers zugeführt.

Bei Eintritt des Druckmittels in die Kammer (37) wird die der Kammer (37) zugewandte Wirkfläche (30) des Steuerkolbens (24) und die jedoch vernachlässigbare Wirkfläche (31) des Steuerkolbens (19), die auch als Anschlag für den Kolben (24) dient, mit dem in der Kammer (37) herrschenden Druck beaufschlagt.

Hierdurch erfolgt eine Verschiebung des Steuerkolbens (24) innerhalb des Steuerkolbens (19) in Schließrichtung des Einlaßventils (32, 35) gegen die Kraft der Feder (25) und in Richtung der Kraft der Feder (36), bis ein Gleichgewichtszustand zwischen dem Druck der Kammer (37) plus der Kraft der Feder (36) einerseits und dem Druck der Druckmittelkammer (22) plus der Kraft der Feder (25) hergestellt ist.

Der vorstehend definierte Gleichgewichtszustand bewirkt, daß der Steuerkolben (24) gegen die Kraft der Feder (25) und vom Anschlag (31) angehoben in eine Stellung, relativ zum Steuerkolben (19), gebracht wird, in der das Einlaßventil (32, 35) der Bremseinrichtung des Anhängerfahrzeuges einen voreilenden, vorgegebenen Bremsdruck zuführt.

Die Höhe des voreilenden Bremsdruckes ist regulierbar, indem die zwischen dem ersten Steuerkolben (24) und dem zweiten Steuerkolben (19) wirkende Kraft der Feder (25) durch die Stellschraube (28) verstellbar ist. In Abhängigkeit von dem Grad der Vorspannung der Feder (25) wird der Bremseinrichtung des Anhängerfahrzeuges durch das Einlaßventil (32, 35) in der sogenannten Vorsteuerphase ein Druck vorgegebener Höhe zugeführt.

Anstelle nur einer Stellschraube (28) können auch mehrere axial zu den Windungen der Feder (25) wirkende Stellschrauben verwendet werden. Hierdurch kann eine, z. B. durch Fertigungstoleranzen bedingte Abweichung der Federkraftrichtung von der Symmetrieachse der Feder (25) ausgeglichen und dadurch die Ansprechbarkeit der Ventileinrichtung (1) verfeinert werden.

Entsprechend der konstruktiven Gestaltung der Ventileinrichtung (1) kann die Stellschraube (28) bzw. Stellschrauben auch am zweiten Steuerkolben (19) mit Wirkrichtung auf den ersten Steuerkolben (24) angeordnet sein.

Die Verstellung der Stellschraube (28) erfolgt mit einem Werkzeug, das durch den Auslaß (41) hindurchführbar ist.

Nach der durch den Schalter (13) ausgelösten Aktivierung der Bremseinrichtung des Anhängerfahrzeuges wird bei einem weiteren Hub des Betätigungsorganes (16) das Bremsventil (5) in Öffnungsstellung gebracht. Hierdurch wird die mit der Leitung (6) verbundene Druckmittelquelle über die Druckmittelleitung (7) mit der Bremseinrichtung des Zugfahrzeuges und über die Druckmittelleitung (4) und die Ventileinrichtung (1) mit der Bremseinrichtung des Anhängerfahrzeuges verbunden. Je nach Stellung des Betätigungsorganes (16) wird den Bremseinrichtungen des Zugfahrzeuges und des Anhängerfahrzeuges ein mehr oder weniger starker Bremsdruck zugeführt.

Das über die Druckmittelleitung (4) der Druckmittelkammer (22) zugeführte Druckmittel bewirkt eine Verschiebung des Steuerkolbens (24) in Richtung auf das Einlaßventil (33, 35), so daß der Bremseinrichtung des Anhängerfahrzeuges über den bereits vorhandenen voreilenden Bremsdruck hinaus ein stufenlos regelbarer Bremsdruck zugeführt wird.

Bei Beendigung des Bremsvorganges des Zugfahrzeuges und des Anhängers fährt das Betätigungsorgan (16) in die Ausgangsstellung zurück. Die an die Druckmittelleitung (6) angeschlossene Druckmittelquelle wird gegenüber den Druckmittelleitungen (4 und 7) abgesperrt. Die Druckmittelleitungen (4 und 7) werden über das Bremsventil (5) in die Atmosphäre entlüftet.

Durch den Druckabfall in der Druckmittelkammer (22) fährt der Steuerkolben (24) durch den auf die Wirkfläche (30) wirkenden Druck der Kammer (37) in eine Stellung, in der das Einlaßventil (33, 35) geschlossen und das Auslaßventil (32, 33) geöffnet ist. Das in der Kammer (37) vorhandene Druckmittel wird über den Auslaß (41) in die Atmosphäre abgeleitet.

In der Ausgangsstellung des Betätigungsorganes (16) ist die Stromzufuhr zu dem elektrischen Steuereingang (15) des Wegeventils (10) unterbrochen. Das Wegeventil (10) hat die Ausgangsstellung eingenommen, in der die Druckmittelkammer (17) über den Auslaß (12) mit der Atmosphäre verbunden ist. Durch die Kraft der Rückstellfeder (20) ist der Steuerkolben (19) in die Ausgangsstellung zurückgekehrt. Damit ist auch der Bremsvorgang des Anhängerfahrzeuges beendet.

Anstelle der elektrischen Schalteinrichtung (13) kann auch eine pneumatische Schalteinrichtung verwendet werden, die einem pneumatischen Steuereingang des Wegeventils (10) ein Druckmittel, z. B. von der an die Druckmittelleitung (11) eingeschlossenen Druckmittelquelle, zugeführt.

**Patentansprüche**

1. Einrichtung zum Steuern des Bremsdruckes für ein von einem Zugwagen gezogenes Anhängerfahrzeug mit folgenden Merkmalen:
    a) Es ist eine Ventileinrichtung (1) vorgesehen mit einem ersten Steuerkolben (24), der mit dem von einem Bremsventil (5) ausgesteuerten Bremssteuerdruck über eine erste Druckmittelkammer (22) beaufschlagbar ist;
    b) die Ventileinrichtung (1) weist einen zweiten Steuerkolben (19) auf, der über ein schaltbares Wegeventil (10) mit dem Druck einer Druckmittelquelle über eine zweite Druckmittelkammer (17) beaufschlagbar ist;
    c) die beiden Druckmittelkammern (22 und 17) sind gegeneinander abgedichtet;
    d) der erste Steuerkolben und der zweite Steuerkolben sind relativ zueinander verschiebbar angeordnet;
    e) das den zweiten Steuerkolben (19) mit der Druckmittelquelle verbindende Wegeventil (10) ist in Abhängigkeit von der Stellung des Betätigungsorganes (16) des Bremsventils (5) schaltbar;
    f) der zweite Steuerkolben (19) ist dem ersten Steuerkolben (24) voreilend mit dem Druck der Druckmittelquelle beaufschlagbar;

    g) die Bremseinrichtung des Anhängerfahrzeuges ist über ein von dem ersten und/oder dem zweiten Steuerkolben betätigbares Ventil (32, 35) mit einer Druckmittelquelle verbindbar;
    gekennzeichnet durch die folgenden Merkmale:
    h) Der erste Steuerkolben (24) ist durch eine Feder (25) auf dem zweiten Steuerkolben (19) abgestützt und durch einen der Kraft der Feder (25) entgegenwirkenden Anschlag (31) des zweiten Steuerkolbens (19) in seiner Bewegung begrenzt;
    i) es sind Mittel (28, 29) vorgesehen, durch die die zwischen dem ersten Steuerkolben (24) und dem zweiten Steuerkolben (19) wirkende Kraft der Feder (25) verstellbar ist.

2. Einrichtung nach Anspruch 1, dadurch gekennzeichnet, daß die Mittel zum Verstellen der Kraft der Feder (25) aus mindestens einer, axial zu den Windungen der Feder (25) wirkenden Stellschraube (28) und einem Federteller (29) bestehen.

3. Einrichtung nach Anspruch 1 oder 2, dadurch gekennzeichnet, daß die Mittel zum Verstellen der Kraft der Feder (25) an dem ersten Kolben (24) angeordnet sind.

4. Einrichtung nach Anspruch 1 oder 2, dadurch gekennzeichnet, daß die Mittel zum Verstellen der Kraft der Feder (25) an dem zweiten Kolben (19) angeordnet sind.

5. Einrichtung nach wenigstens einem der vorhergehenden Ansprüche, dadurch gekennzeichnet, daß der Hub des zweiten Kolbens (19) in Richtung der auf ihn wirkenden Kraft einer Druckmittelquelle durch einen gehäusefesten Anschlag (21) begrenzt ist.

6. Einrichtung nach wenigstens einem der vorhergehenden Ansprüche, dadurch gekennzeichnet, daß der erste Steuerkolben (19) teleskopartig zueinander verschiebbar angeordnet sind.

7. Einrichtung nach wenigstens einem der vorhergehenden Ansprüche, dadurch gekennzeichnet, daß die dem zweiten Steuerkolben (19) zugeordnete vom Druck der Druckmittelquelle beaufschlagbare zweite Druckmittelkammer (17) von einer ringförmigen Wirkfläche (18) des zweiten Steuerkolbens (19) begrenzt ist.

**Claims**

1. An arrangement for controlling the brake pressure for a trailer vehicle pulled by a towing vehicle, having the following features:
    a) a valve arrangement (1) is provided, having a first control piston (24) which can be loaded by way of a first pressure medium chamber (22) with the brake control pressure delivered from a brake valve (5);
    b) the valve arrangement (1) has a second control piston (19) which can be loaded by way of a second pressure medium chamber (17) by way of a switchable directional control valve (10) with the pressure of a pressure medium source;
    c) the two pressure medium chambers (22 and 17) are sealed with respect to one another;
    d) the first control piston and the second control piston are arranged to be displaceable relative to one another;

e) the directional control valve (10) connecting the second control piston (19) to the pressure medium source is switchable in dependence on the position of the actuating element (16) of the brake valve (5);

f) the second control piston (19) can be loaded in advance of the first control piston (24) with the pressure from the pressure medium source;

g) the braking device of the trailer vehicle can be connected by way of a valve (32, 35) operable by the first and/or the second control piston to a pressure medium source;

characterized by the following features:·

h) the first control piston (24) is supported by a spring (25) on the second control piston (19) and limited in its movement by a stop (31) on the second control piston (19) counteracting the force of the spring (25);

i) there are provided means (28, 29) by which the force of the spring (25) acting between the first control piston (24) and the second control piston (19) is adjustable.

2. An arrangement according to claim 1, characterized in that the means for adjusting the force of the spring (25) consist of at least one adjusting screw (28) and a spring washer (29) acting axially with respect to the windings of the spring (25).

3. An arrangement according to claim 1 or 2, characterized in that the means for adjusting the force of the spring (25) are arranged on the first piston (24).

4. An arrangement according to claim 1 or 2, characterized in that the means for adjusting the force of the spring (25) are arranged on the second piston (19).

5. An arrangement according to at least one of the preceding claims, characterized in that the stroke of the second piston (19) in the direction of the force of a pressure medium source acting on it is limited by a stop (21) fixedly arranged in the housing.

6. An arrangement according to at least one of the preceding claims, characterized in that the first control piston (24) and the second control piston (19) are arranged to be telescopically displaceable with respect to one another.

7. An arrangement according to at least one of the preceding claims, characterized in that the second pressure medium chamber (17) associated with the second control piston (19) and loaded by the pressure of the pressure medium source is limited by a ring-shaped active surface (18) of the second control piston.

**Revendications**

1. Dispositif de commande de la pression de freinage pour un véhicule remorqué par un tracteur, présentant les caractéristiques suivantes:

a) Il est prévu un bloc de vannes (1) avec un premier piston de commande (24) qui peut être soumis à la pression de commande du freinage provenant d'une première chambre de fluide sous pression (22) et commandée par une vanne de freinage (5);

b) le bloc de vannes (1) possède un second piston de commande (19) qui peut être soumis en passant par une vanne de distribution commutable (10) et par une seconde chambre de fluide sous pression (17) à la pression d'une source de fluide sous pression;

c) les deux chambres de fluide sous pression ne communiquent pas entre elles;

d) le premier piston de commande et le second piston de commande sont disposés de manière à pouvoir se déplacer relativement l'un par rapport à l'autre;

e) la vanne de distribution (10) reliant le second piston de commande (19) à la source de fluide sous pression est commutable en fonction de la position de l'organe d'actionnement (16) de la vanne de freinage (5);

f) le second piston de commande (19) peut être soumis à la pression de la source de fluide sous pression en avance sur le premier piston de commande (24);

g) le dispositif de freinage du véhicule remorqué peut être relié à une source de fluide sous pression par l'intermédiaire d'une vanne (32, 35) qui peut être actionnée par le premier et/ou par le second piston de commande;

caractérisé

h) en ce que le premier piston de commande (24) est appuyé par un ressort (25) contre le second piston de commande (19) et est limité dans son déplacement par une butée (31) du second piston de commande (19) s'opposant à la force du ressort (25);

i) en ce qu'il est prévu des dispositifs (28, 29) permettant de régler la force du ressort (25) agissant entre le premier piston de commande (24) et le second piston de commande (19).

2. Dispositif selon la revendication 1, caractérisé en ce que les dispositifs de réglage de la force du ressort (25) se composent d'au moins une vis de réglage (28) agissant dans le sens axial sur les spires du ressort (25) et une cuvette de ressort (29).

3. Dispositif selon la revendication 1 ou 2, caractérisé en ce que les dispositifs de réglage de la force du ressort (25) sont disposés sur le premier piston (24).

4. Dispositif selon la revendication 1 ou 2, caractérisé en ce que les dispositifs de réglage de la force du ressort (25) sont disposés sur le second piston (19).

5. Dispositif selon au moins une des revendications précédentes, caractérisé en ce que la course du second piston de commande (19) est limitée par une butée (21) solidaire du corps dans la direction de la force qui lui est appliquée par une source de fluide sous pression.

6. Dispositif selon au moins une des revendications précédentes, caractérisé en ce que le premier piston de commande (24) et le second piston de commande (19) sont disposés de façon à pouvoir se déplacer l'un par rapport à l'autre de manière télescopique.

7. Dispositif selon au moins une des revendications précédentes, caractérisé en ce que la seconde chambre de fluide sous pression (17), pouvant être soumise à la pression de la source de fluide sous pression et correspondant au second piston de commande (19) est limitée par une surface active de forme annulaire (18) du second piston de commande (19).